# EUROPÄISCHE PATENTSCHRIFT

(11) **EP 0 762 057 B1**
(45) Veröffentlichungstag und Bekanntmachung des Hinweises auf die Patenterteilung: **31.07.2002**
(21) Anmeldenummer: 96113667.8
(22) Anmeldetag: 27.08.1996
(51) Int. Cl.: F23R 3/14, F23R 3/28

(54) **Einrichtung zur Vermischung von Brennstoff und Luft für Brennkammern von Gasturbinentriebwerken**
Mixing device for fuel and air for gas turbine combustors
Dispositif de mélange de carburant et de l'air pour un combusteur de turbine à gaz

(30) Priorität: 01.09.1995 DE 19532264
(43) Veröffentlichungstag der Anmeldung: 12.03.1997
(73) Patentinhaber: MTU Aero Engines GmbH, 80995 München (DE)
(72) Erfinder: Zarzalis, Nikolaos, Dr., 85221 Dachau (DE)
(74) Vertreter: Einsele, Rolf W.

(56) Entgegenhaltungen:
- WO-A-95/16881
- DE-A- 2 018 485
- DE-A- 3 819 898
- FR-A- 2 086 476
- FR-A- 2 391 422
- US-A- 5 394 688

## Beschreibung

Die Erfindung bezieht sich auf eine Einrichtung zur Aufbereitung eines Gemisches aus Brennstoff und Luft an Brennkammern für Gasturbinentriebwerke.

Aus der DE-PS 41 10 507 ist bei einem Brenner für Gasturbinentriebwerke folgendes bekannt: Austrittsseitig und koaxial zur gemeinsamen Achse des Brenners und einer zentralen Brennstoffdüse sind zwei ringförmige Drallerzeuger für die Zufuhr von Verbrennungsluft in die Brennkammer vorgesehen. Die Drallkanäle der beiden Drallerzeuger sind austrittsseitig durch eine venturirohrartig gestaltete, stromab gegenüber dem Brennraum offene Leithülse gegeneinander abgeschirmt. Über die zentrale Brennstoffdüse soll stromab längs der Innenwand der Leithülse Brennstoff als Film aufgetragen werden. Unter der Scherkraftwirkung beider Drallströmungen soll längs einer Abreißkante der Leithülse abfließender Brennstoff vernebelt und in die von beiden Drallströmungen ausgebildeten Rotationswirbel eingebunden werden.

Bei einem Brenner dieser bekannten Art ergeben sich bezüglich der Gemischaufbereitung im wesentlichen zwei gravierende Nachteile.

Der erste Nachteil bezieht sich auf die Abhängigkeit der Brennstoffzerstäut>ung von der Filmdicke. Da sich der Durchmesser des zylindrischen Teils, auf dem sich der Brennstoff in Filmform bewegt, aus Gründen der Verbrennungsstabilität nicht beliebig vergrößern läßt, muß die Filmdicke zwangsläufig mit steigender Last, d. h. steigender Brennstoffzufuhr, wachsen. Das Anwachsen der Filmdicke führt zu einer Verschlechterung der Tropfenqualität.

Der zweite Nachteil bezieht sich auf die Mischung des Brennstoffes mit der Luft. Da der Brennstoff nach dem Zerstäubungsprozeß in den Brennraum wandert, bleibt keine ausreichende Zeit übrig, um den Brennstoff mit der Luft homogen zu vermischen. Dieser Sachverhalt macht sich mit steigender last immer mehr bemerkbar, da die Flamme mit steigender Last in Richtung auf den Brennkammerkopf bzw. in Richtung auf die stromaufwärtige Flammrohrwand wandert, wodurch sich die Verweilzeit zum Mischen von Brennstoff mit Luft auf ein Minimum reduziert.

Der Erfindung liegt die Aufgabe zugrunde, die zu Bekanntem erwähnten Nachteile zu beseitigen und eine Einrichtung zur Aufbereitung eines Gemisches aus Brennstoff und Luft für die Verbrennung anzugeben, mit der bei vergleichsweise einfacher Bauweise die erforderliche Verweilzeit für eine homogene Gemischaufbereitung, und damit optimale Verbrennung bereitgestellt wird.

Die gestellte Aufgabe ist durch Patentanspruch 1 erfindungsgemäß gelöst.

Der mindestens eine Profilkörper kann auch als sogenannter "Filmleger" bezeichnet werden. Mit nur einem einzigen Profilkörper gelingt es, schon innerhalb der Drallvorrichtung eine gleichförmige Mischung und Aufbereitung des dem Brennraum bzw. der Primärzone zuzuführenden Brennstoff-Luft-Gemisches zu erzielen.

Die Anzahl der Profilkörper kann vergrößert werden, um mit Rücksicht auf vergleichsweise hohe Triebwerkslastzustände eine kritische Filmdicke des flüssig zugeführten Brennstoffes nicht zu überschreiten (siehe u. a. Anspruch 9: "mehrere Profilkörper").

Bedarfsweise kann ferner jeder Drallkanal mit einem Profilkörper und jeweils filmartiger Brennstoffauftragung ausgestattet werden.

Aus mindestens einer Verteilerkammer im Profilkörper (Anspruch 2) kann der Brennstoff auf mehrere Bohrungen gleichmäßig verteilt und einem betreffenden Oberflächenabschnitt zugeführt werden; tangential am betreffenden Oberflächenabschnitt endende Bohrungen (Anspruch 3) begünstigen eine gezielte, oberflächenseitige Brennstoffabströmung und -filmbildung.

Eine optimale Brennstoffzerstäubung wird ferner im Wege der Merkmale nach Anspruch 4 und/oder 5 erreicht. Gemäß Anspruch 4 kann der filmartig zugeführte flüssige Brennstoff längs der sich komplett über die Mischkammerlänge erstreckenden spitzen Endkante - aufgrund Scherkraftwirkung der den Profilkörper umgebenden Luftströmung im Drallkanal - in ein Muster feinster, nebelartiger Brennstofftröpfchen aufgefächert werden. Zusätzlich wird Letzteres sinngemäß im Wege der von den einzelnen spitzen Endkanten der Profile (Anspruch 5) ausgebildeten Zerstäuberkanten erreicht, und zwar im Wege der jeweils ein Profil umgebenden Luftströmung aus zwei am Umfang benachbarten Drallkanälen.

Bereits mit nur einem einzigen Profilkörper mit filmartiger Brennstoffauftragung nach Anspruch 1 und in Ausbildung mit zugehöriger Zerstäuberkante (Anspruch 4) kann überAnspruch 5 eine umfängliche Mehrfachzerstäubung erreicht werden; sofern nämlich noch verhältnismäßig große Brennstofftropfen vorliegen sollten, so können diese - im Wege der aus der Drallströmung sich ergebenden turbulenten Querbewegung - längs der innenliegenden Kanalwände abgeschleudert und an den spitzen Endkanten der Profile fortlaufend fein bzw. nebelartig zerstäubt werden.

Im Wege anschließender weiterer Durchmischung der Luft über die Drallströmung im Mischkanal mit dem nebelartig bzw. nahezu dampfförmig aufbereiteten Brennstoff kann somit vor Eintritt des Gemisches in den Brennraum ein hoher Verdampfungsgrad erreicht werden.

Gemäß Anspruch 7 kann eine hochfeine bzw. nebelartige Brennstoffzerstäubung weiter gefördert werden; es sind dabei die Profilkörper bzw. "Filmleger" in Richtung der örtlichen Profilumströmung kürzer als die relativen, von außen nach innen weisenden Kanallängen ausgeführt, wodurch sich örtlich räumlich relativ zueinander versetzte End- bzw. Zerstäuberkanten am Profilkörperende relativ zu zwei Endkanten am jeweiligen Kanalaustritt ergeben.

Im Wege der zusätzlichen Brennstoffdüse nach Anspruch 8 kann die Verbrennungsstabilität erhöht werden. Durch den Einsatz einer derartigen sogenannten "Pilot-Düse" kann z. B. die Stabilitätsgrenze bei magerer bzw. luftreicher Verbrennung (Lean Blow Out) oder das Wiederzündverhalten gewährleistet bzw. verbessert werden.

Im Falle mehrerer Profilkörper mit daran flüssig und filmartig aufgetragenem Brennstoff (Anspruch 9) können mehrere derartige oder den "Filmlegern" ähnlich gestaltete weitere Profilkörper für gasförmigen Brennstoff (Anspruch 10) vorgesehen sein. Somit ist ein Zweistoffbetrieb gleichzeitig möglich oder bedarfsweise ein Betrieb mit nur flüssig oder gasförmig zugeführtem Brennstoff.

Gemäß Anspruch 11 kann man durch entsprechende Variation des Mischungskanalwinkels α die Lage des Rezirkulationsgebietes bzw. der Reaktionszone für die Verbrennung steuern; eine Erweiterung des Mischkanals (α > 0) würde bei erhöhter Verbrennungsstabilität zu einer axial dichteren Verschiebung der Reaktionszone in Richtung auf die Flammrohrrückwand führen; das Gegenteil wäre bei α < 0 der Fall, wobei hier davon auszugehen wäre, daß sich eine Mischung (Brennstoff/Luft) sowie eine weitere Verdampfung des Brennstoffs bis in den Brennraum hinein fortsetzt.

Anhand der Zeichnungen ist die Erfindung beispielhaft weiter erläutert; es zeigen:
- Fig. 1: eine stromab quer geschnitten dargestellte Ansicht der für die Zufuhr von Brennstoff und Luft ausgebildeten Drallvorrichtung,
- Fig. 2: einen Mittellängsschnitt gemäß A-A der Drallvorrichtung aus Fig. 1 unter beispielhafter Verdeutlichung einer sich in Richtung auf den Brennraum hin stromab darstellenden Aufweitung des Mischkanals (α>0),
- Fig. 3: die im Schnitt nach Fig. 2 dargestellte Drallvorrichtung, hier jedoch mit zusätzlicher Brennstoffdüse sowie in Zuordnung zum und Halterung am stromaufwärtigen Kopfende einer Ringbrennkammer, als Mittellängsschnitt dargestellt,
- Fig. 4: ein Profilquerschnitt eines schaufelartigen Profilkörpers in gegenüber Fig. 1 abgewandelter stromlinienförmiger Gestaltung unter Verdeutlichung der Speicherung, Verteilung sowie Filmbildung und der Zerstäubung flüssigen Brennstoffes und
- Fig. 5: einen Profilquerschnitt eines schaufelartigen Profilkörpers im Sinne der Fig. 4, hier jedoch in Verdeutlichung jeweils für sich oder in Kombination geeigneter Ausblasekonfigurationen für gasförmigen Brennstoff.

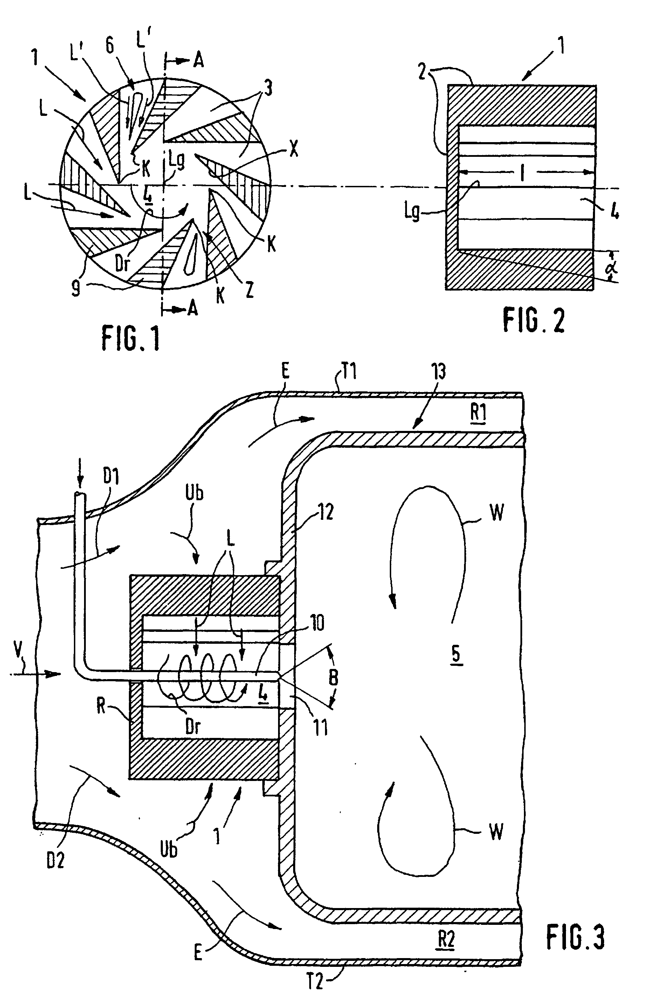

Es wird eine Einrichtung zur optimalen Aufbereitung eines Brennstoff-Luft-Gemisches für Brennkammern von Gasturbinentriebwerken angegeben. Hierzu ist eine Drallvorrichtung 1 (Fig. 1, 2 und 3) zur Mischung von Brennstoff und Luft vorgesehen, mit der für eine gleichförmige primäre Verbrennung im Brennraum 5 (Fig. 3) eine hochfeine nebelartige Zerstäubung des flüssigen Brennstoffes erzielt werden soll. Ein Ringmantel 2 der Drallvorrichtung 1 weist mehrere gleichmäßig über dem Umfang verteilte Drallkanäle 3 für die Zufuhr von Verbrennungsluft L auf. Die Drallkanäle 3 münden tangential in einen axialen Mischkanal 4. Der Mischkanal 4 ist über eine als Boden des Ringmantels 2 bzw. des Mischkanals 4 fungierende Rückwand R gegenüber axial anströmender Druckluft V (Fig. 3) verschlossen. Stromab steht der Mischkanal 4 über eine Öffnung 11 (Fig. 3) mit dem Brennraum 5 in Verbindung. Gemäß Fig. 1 weisen sich am Umfang einander gegenüberliegende Drallkanäle 3 jeweils einen schaufelartig gestalteten Profilkörper 6 auf, an dem Brennstoff als Film F in Richtung der den jeweiligen Drallkanal 3 durchströmenden Luft L aufgetragen wird. Die Profilkörper 6 sind gegenüber jeweils umfänglich benachbarten Kanalwänden des Drallkanals 3 mit gleichförmigem Abstand gehalten, so daß sich eine örtliche Profilumströmung L'ergibt.

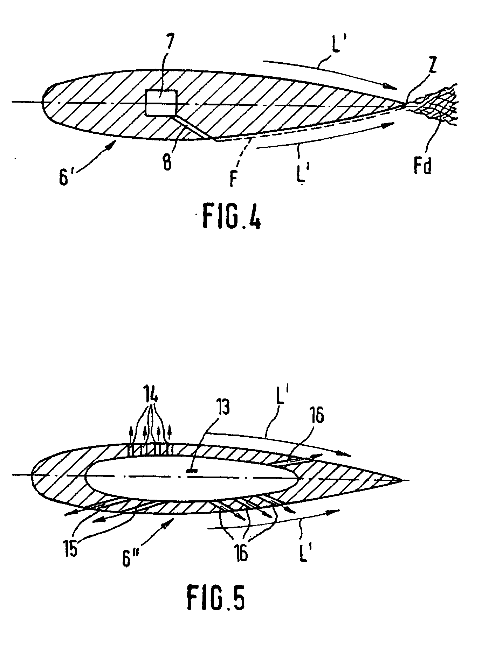

Die Profilkörper 6 nach Fig. 1 weisen eine gerundete Anströmkante auf, wobei der Radius der Abrundung zugleich die maximale Profildicke definiert. Von der gerundeten Anströmkante aus geht das Profil sich geradlinig gleichförmig verjüngend in seine stromabwärtige Endkante über, die als Zerstäuberkante Z für den zugeführten Brennstoff fungiert. Letzterer Sachverhalt ist anhand der Fig. 4 genauer verdeutlicht unter Beiziehung einer leicht gegenüber Fig. 1 abgewandelten Ausführung eines Profilkörpers 6', der im Sinne eines stützschaufelartig stromlinienförmigen Profils - in Richtung der Strömung - von einer gerundeten Anström- bzw. Nasenkante aus stromab zunächst auf seine größte Profildicke übergeht und von dort leicht gewölbt in seine stromab spitze Endkante übergeht. Letztere fungiert im Betrieb als Zerstäuberkante Z für den als Film F über Bohrungen 8 aus einem Verteilerraum 7 zugeführten Brennstoff. Relativ zur Symmetrieebene des Schaufelprofils weist der Profilkörper 6' derart geneigte Bohrungen 8 auf, daß letztere tangential in den betreffenden Oberflächenabschnitt münden, so daß der Brennstoffilm F kontinuierlich an der Profiloberfläche anliegend stromab in Richtung auf die Zerstäuberkante Z abfließen kann. Die Bohrungen 8 sind in engen Abständen gleichförmig schräg übereinanderliegend angeordnet. Nicht dargestellt, kann der Brennstoff aus einem Tank über eine Hauptleitung zugeführt werden, die an eine die Drallvorrichtung außen ringförmig umgebende Verteilerleitung angeschlossen ist, wobei letztere jeweils über eine einzelne Zuleitung mit dem Verteilerraum 7 des betreffenden Profilkörpers z. B. 6' (Fig. 4), fluidisch verbunden ist. Im Wege des dem betreffenden Drallkanal 3 von außen zugeführten Anteils an Primärluft L (Fig. 1) bildet sich beidseitig längs am Profilkörper 6' (Fig. 4) eine Profilumströmung L'aus. Über die Scherkraftwirkung der beidseitigen Profilströmung L' wird längs der Zerstäuberkante Z aus dem Film F zugeführter Brennstoff in einem etwa kegelförmig aufgeweiteten Strömungsfeld Fd hochfein zerstäubt und in die Kanalströmung - stromab der Zerstäuberkante Z - eingebunden und hierauf dem Mischkanal 4 zugeführt. Dabei können noch nicht vernebelte, verhältnismäßig große Brennstofftropfen unter der Zentrifugalwirkung der im Mischkanal 4 rotierenden Drallströmung Dr des Brennstoff-Luft-Gemisches örtlich endseitig längs einer oder mehrerer Innenwände ausgefällt werden, z. B. an der Stelle X (Fig. 1). Etwa im Sinne der Fig. 4 können so an der Stelle X anfallende verhältnismäßig große, unzerstäubte Brennstofftropfen in beidseitiger Umströmung des von außen nach innen sich keilförmig verjüngenden Profils 9 längs der spitzen Endkante K fein zerstäubt werden. Gegebenenfalls können so noch weitere über dem Umfang verteilte Endkanten K der Profile 9 als zusätzliche Zerstäuberkanten beigezogen werden.

Bei der Drallvorrichtung 1 nach Fig. 1, 2 und 3 weisen die Drallkanäle 3 viereclkige Durchströmquerschnitte mit axial und umfänglich geraden Wandungen auf.

Ferner sind bei der Drallvorrichtung 1 die Drallkanäle 3 zwischen den gleichförmig über dem Umfang verteilten Profilen 9 des Ringmantels 2 ausgebildet; mit den innenliegenden spitzen Endkanten K werden die jeweiligen Austrittsöffnungen der Drallkanäle 3 in den Mischkanal 4 definiert; die spitzen Endkanten K sind hier z. B. jeweils gleichförmig radial mit Abstand und parallel zur Längsachse Lg der Drallvorrichtung angeordnet. Es liegen die spitzen Endkanten K auf einem gedachten zylindrischen Mantel, der koaxial zur Längsachse Lg angeordnet ist. Die Zerstäuberkanten Z der beiden Profilkörper 6 verlaufen ebenfalls parallel und in gleichförmigem Abstand zur gemeinsamen Längsachse Lg der Drallvorrichtung 1 und des Mischkanals 4.

Wie ferner aus Fig. 1 erkennbar, sind die Profile 9, und damit die Drallkanäle 3 vom äußeren Umfang des Ringmantels 2 aus in Richtung auf den Mischkanal 4 in sich jeweils gleichmäßig verjüngender Bauweise ausgebildet.

Der betreffende Drallkanal 3, in dem ein Profilkörper 6 (Fig. 1) oder 6' (Fig. 4) angeordnet ist, ist bezüglich der durch zwei umfänglich benachbare Endkanten K definierten, maximal nach innen weisenden Baulänge, über die Zerstäuberkante Z des dortigen Profilkörpers 6 hinweggeführt.

In Fig. 3 weist die Drallvorrichtung 1 eine zusätzliche Brennstoffdüse 10 auf, die sich zentrisch und axial innerhalb des Mischkanals 4 erstreckt und die austrittsseitig an einer Austrittsebene oder-Öffnung 11 endet, die mit dem Brennraum 5 in Verbindung steht. Fig. 3 verkörpert die Anordnung der Drallvorrichtung 1 mit der zentralen Brennstoffdüse 10 am stromaufwärtigen Kopfende einer Ringbrennkammer, stromauf und stromab abgebrochen dargestellt. Dabei ist die Drallvorrichtung 1 an der Rückwand 12 des Flammrohrs 13 der Brennkammer gehaltert. Die Flammrohrrückwand 12 bildet die Öffnung 11 aus und verschließt die Drallkanäle 3 stromab axial. Ringförmige Gehäuseteile T1, T2 ummanteln das Flammrohr 13 und die Drallvorrichtung mit Abstand. Auf diese Weise werden ein radial äußerer und ein radial innerer Ringkanal R1 bzw. R2 ausgebildet. Aus einem nicht gezeigten Axialdiffusor abströmende, am Verdichterende des Triebwerks entnommene Druckluft V strömt axial gegen die geschlossene Rückwand R ab und teilt sich in zwei Teilströme D1, D2 auf. Aus beiden Teilströmen D1, D2 werden die Drallkanäle 3 der Drallvorrichtung 1 außen, radial von oben (Pfeile Ub) mit Verbrennungsluft L (Fig. 1) versorgt. Aus beiden Teilströmen D1, D2 verbleibende Restteile E an Druckluft strömen in den radial äußeren bzw. radial innen liegenden Ringkanal R1 bzw. R2 ab, um dem Flammrohr 13 z. B. teils Kühlluft, Mischluft oder Tertiärluft zugeführt zu werden.

Im Mischkanal 4 bildet sich eine rotierende Drallströmung Dr (Fig. 1 und 2) als homogenes Gemisch aus Verbrennungsluft und fein zerstäubten Brennstoffanteilen aus. Dieses Gemisch strömt als rotierende Wirbelströmung W in den Brennraum 5 über die Öffnung 11 ab, um für eine homogene primäre sowie aerodynamisch stabile Verbrennung zu sorgen. Schon beim Austritt aus der Öffnung 11 kann dem der Drallströmung Dr innewohnenden und in den Brennraum 5 abströmenden Gemisch aus Brennstoff und Luft zusätzlich Brennstoff über die Brennstoffdüse 10 fein zerstäubt zugemischt werden (Abspritzkegel B).

Die Drallvorrichtung 1 kann mehrere gleichförmig über dem Umfang verteilte Profilkörper 6 aufweisen. Weist z. B. jeder über dem Umfang aufeinanderfolgende zweite Drallkanal 3 einen Profilkörper 6 oder 6' auf, so können die restlichen Drallkanäle 3 jeweils mit einem schaufelartigen Drallkörper 6" (Fig. 5) für gasförmige Brennstoffzufuhr ausgestattet werden. Hierzu weist der mit der Grundform nach Fig. 4 praktisch identische Profilkörper 6" nach Fig. 5 mindestens einen Verteilerraum 13 auf. Relativ zur beidseitigen äußeren Luftumströmung L' können Öffnungen oder Bohrungen im Schaufelmantel angeordnet sein, um das Brenngas seitlich (Bohrungen 14) und/oder schräg nach vorn gerichtet (Bohrungen 15) und/oder schräg seitlich und nach hinten gerichtet (Bohrungen 16) jeweils auf einer oder beiden Schaufelseiten abströmen zu lassen. Unter Vorvermischung mit der den Profilkörper 6" beidseitig umgebenden Luftströmung L' kann eine weitere Durchmischung im Mischkanal 4 erfolgen. Dabei sind über die Drallvorrichtung 1 voneinander getrennte Betriebsarten - Brennstoff flüssig oder gasförmig - oder beide Betriebsarten gleichzeitig möglich.

Für die Zufuhr von gasförmigem Brennstoff in den Verteilerraum 13 (Fig. 5) kann ein separates zu- oder abschaltbares Brennstoffversorgungssystem vorgesehen sein, bestehend u. a. aus einer Hauptleitung, einer Verteilerleitung und Einzelleitungen zu den Profilkörpern 6". Mit genannter gasförmiger Brennstoffzuführung ist ein jeweiliger Ein-oder Zweistoffbetrieb, z. B. für stationäre Gasturbinenanlagen, möglich.

Wie schematisch in Fig. 2 angedeutet, kann der Mischkanal 4 in Richtung auf den Brennraum 5 hin symmetrisch kegelförmig erweitert werden, wobei für diesen Fall der Winkel α > 0 ist. Das bedeutet, daß nicht nur die Zerstäuberkanten Z (Fig. 1) sondern auch die Endkanten K der Profile 9 dieser Erweiterung folgen. Mithin liegen dabei also die spitzen Endkanten K der Profile 9 auf einem gedachten Kegelmantel, der sich in koaxialer Anordnung zur Längsachse Lg rotationssymmetrisch in Richtung auf den Brennraum 5 hin erweitert.

In Fig. 2 definiert I eine mögliche relativ große Gesamtlänge des Mischkanals 4 bei gemäß I geich großer axialer Längenerstreckung der Drallkanäle 3 zugunsten einer über I steuerbaren bzw. einer erreichbaren hinreichend langen Verweilzeit, die für eine optimale Gemisch-Aufbereitung benötigt wird.

## Patentansprüche

1. Einrichtung zur Aufbereitung eines Gemisches aus Brennstoff und Luft an Brennkammern für Gasturbinentriebwerke mit einer ringförmigen Drallvorrichtung (1), die an einem Ringmantel (2) mehrere gleichmäßig über dem Umfang verteilte Drallkanäle (3) für die Zufuhr von Verbrennungsluft (L) aufweist, die tangential in einen axialen Mischkanal (4) münden, der stromauf verschlossen ist und stromab mit dem Brennraum (5) in Verbindung steht, worin mindestens ein Drallkanal (3) einen zwischen umfänglich benachbarten Kanalwänden mit Abstand gehaltenen Profilkörper (6, 6') aufweist, an dem Brennstoff als Film (F) in Richtung der im Drallkanal herrschenden Luftströmung aufgetragen wird.

2. Einrichtung nach Anspurch 1, **dadurch gekennzeichnet, daß** der Profilkörper (6') mindestens eine Verteilerkammer (7) für zugeführten Brennstoff aufweist, aus der der Brennstoff über Bohrungen (8) einem seitlichen Oberflächenabschnitt des Profilkörpers als Film (F) zugeführt wird.

3. Einrichtung nach Anspruch 2, **dadurch gekennzeichnet, daß** die Bohrungen (8) abströmseitig tangential am betreffenden Oberflächenabschnitt enden.

4. Einrichtung nach einem der Ansprüche 1 bis 3, **dadurch gekennzeichnet, daß** der Profilkörper (6, 6') einen schaufelartig gestalteten Profilquerschnitt aufweist, der von der Stelle seiner größten Profildicke aus in eine spitze Hinterkante aufläuft, die sich als Zerstäuberkante (Z) parallel zur gemeinsamen Längsachse (L) der Drallvorrichtung (1) und des Mischkanals (4) erstreckt.

5. Einrichtung nach einem oder mehreren der Ansprüche 1 bis 4, **dadurch gekennzeichnet, daß** die Drallkanäle (3) zwischen gleichförmig über dem Umfang verteilten Profilen (9) des Ringmantels (2) ausgebildet sind, die mit innenliegenden spitzen Endkanten (K) die jeweiligen Austrittsöffnungen der Drallkanäle (3) in den Mischkanal (4) definieren, wobei die spitzen Endkanten (K) jeweils gleichförmig radial mit Abstand und parallel zur Längsachse (Lg) der Drallvorrichtung (1) angeordnet sind.

6. Einrichtung nach Anspruch 5, **dadurch gekennzeichnet, daß** die Profile (9), und damit die Drallkanäle (3) vom äußeren Umfang des Ringmantels (2) aus in Richtung auf den Mischkanal (4) in sich jeweils gleichmäßig verjüngender Weise ausgebildet sind.

7. Einrichtung nach einem oder mehreren der Ansprüche 1 bis 6, **dadurch gekennzeichnet, daß** der betreffende Drallkanal (3), in dem ein Profilkörper (6, 6') angeordnet ist, bezüglich der durch zwei umfänglich benachbarte Endkanten (K) definierten, maximal nach innen weisenden Baulänge, über die Zerstäuberkante (Z) des Profilkörpers (6, 6') hinweggeführt ist.

8. Einrichtung nach einem oder mehreren der Ansprüche 1 bis 7, **dadurch gekennzeichnet, daß** die Drallvorrichtung (1) eine zusätzliche Brennstoffdüse (10) aufweist, die sich zentrisch und axial innerhalb des Mischkanals (4) erstreckt und die austrittsseitig an einer Austrittsebene oder -Öffnung (11) endet, die mit dem Brennraum (5) in Verbindung steht.

9. Einrichtung nach einem oder mehreren der Ansprüche 1 bis 8, **dadurch gekennzeichnet, daß** die Drallvorrichtung (1) mehrere gleichmäßig über dem Umfang verteilte Profilkörper (6, 6') aufweist.

10. Einrichtung nach Anspruch 9, **dadurch gekennzeichnet, daß** die Drallvorrichtung mehrere gleichmäßig über dem Umfang verteilte zusätzliche schaufelartige Profilkörper (6") aufweist, mit denen jeweils innerhalb eines Drallkanals (3) dem betreffenden Primärluftanteil gasförmiger Brennstoff zugeführt wird.

11. Einrichtung nach einem oder mehreren der Ansprüche 1 bis 10, **dadurch gekennzeichnet, daß** der Mischkanal (4) der Drallvorrichtung (1) in Richtung auf den Brennraum (5) symmetrisch erweitert (α>0) oder verengt (α<0) ausgebildet ist.

## Claims

1. System for preparing a fuel and air mixture in combustion chambers for gas turbine engines with an annular swirl system (1) having several swirl passages (3) for delivering combustion air (L) distributed uniformly about the circumference of an annular casing (2) and opening at a tangent into an axial mixing passage (4) which is closed upstream and connects with the combustion chamber (5) downstream, at least one swirl passage (3) having a profiled body (6, 6') maintained at a distance between circumferentially adjacent passage walls, to which fuel is applied as a film (F) in the direction of the air flow prevailing in the swirl passage.

2. System as claimed in claim 1, **characterised in that** the profiled body (6') has at least one distributor chamber (7) for delivered fuel, from which the fuel is delivered via bores (8) to a lateral surface portion of the profiled body in the form of a film (F).

3. System as claimed in claim 2, **characterised in that** the bores (8) terminate at a tangent to the relevant surface portion on the downstream side.

4. System as claimed in one of claims 1 to 3, **characterised in that** the profiled body (6, 6') has a profile cross section of a vane-type design extending from the point of its biggest profile thickness to a pointed rear edge which forms an atomiser edge (Z) extending parallel with the common longitudinal axis (L) of the swirl system (1) and the mixing passage (4).

5. System as claimed in one or more of claims 1 to 4, **characterised in that** the swirl passages (3) are provided between profiles (9) of the annular casing (2) distributed uniformly around the circumference, which, in conjunction with internally lying pointed terminal edges (K) define the respective outlet orifices of the swirl passages (3) into the mixing passage (4), the pointed terminal edges (K) being respectively arranged at a uniform radial distance from and parallel with the longitudinal axis (Lg) of the swirl system (1).

6. System as claimed in claim 5, **characterised in that** the profiles (9) and hence each of the swirl passages (3) are of a design which tapers uniformly starting from the outer circumference of the annular casing (2) towards the mixing passage (4).

7. System as claimed in one or more of claims 1 to 6, **characterised in that**, in terms of the maximum inwardly pointing structural length defined by two circumferentially adjacent terminal edges (K), the relevant swirl passage (3) in which a profiled body (6, 6') is disposed leads off beyond the atomiser edge (Z) of the profiled body (6,6').

8. System as claimed in one or more of claims 1 to 7, **characterised in that** the swirl system (1) has an additional fuel nozzle (10), which extends centrally and axially inside the mixing passage (4) and which terminates on the outlet side at an outlet plane or orifice (11) which connects with the combustion chamber (5).

9. System as claimed in one or more of claims 1 to 8, **characterised in that** the swirl system (1) has several profiled bodies (6, 6') distributed uniformly about the circumference.

10. System as claimed in claim 9, **characterised in that** the swirl system has several additional vane-type profiled bodies (6") distributed uniformly about the circumference, by means of which gaseous fuel is delivered to the relevant proportion of primary air inside a respective swirl passage (3).

11. System as claimed in one or more of claims 1 to 10, **characterised in that** the mixing passage (4) of the swirl system (1) is designed so that it becomes symmetrically wider (α>0) or narrower (α<0) towards the combustion chamber (5).

## Revendications

1. Dispositif de préparation d'un mélange de carburant et d'air dans des chambres de combustion pour des groupes propulseurs à turbine à gaz, comportant un organe créant un écoulement hélicoïdal annulaire (1) qui, sur une enveloppe annulaire (2), présente, pour l'apport d'air de combustion (L), plusieurs canaux hélicoïdaux qui sont régulièrement répartis sur la périphérie et débouchent tangentiellement dans un canal mélangeur axial (4) qui est obturé en amont et qui est relié en aval avec la chambre de combustion (5), dans lequel au moins un canal hélicoïdal (3) présente un élément profilé (6, 6') qui est maintenu à distance entre des parois du canal voisines sur la périphérie et sur lequel du carburant se dépose sous forme d'un film (F) selon la direction de l'écoulement de l'air régnant dans le canal hélicoïdal.

2. Dispositif selon la revendication 1, **caractérisé par le fait que** l'élément profilé (6') présente, pour le carburant apporté, au moins une chambre de répartition (7) d'où le carburant est amené, sous forme d'un film (F), par des perçages (8), à un tronçon de surface latérale de l'élément profilé.

3. Dispositif selon 1a revendication 2, **caractérisé par le fait que** les perçages (8) se terminent, côté aval, tangentiellement au tronçon de surface en question.

4. Dispositif selon l'une des revendications 1 à 3, **caractérisé par le fait que** l'élément profilé (6, 6') présente une section de profil en forme de pale qui, depuis l'endroit de sa plus grande épaisseur de profil, se termine en une arête arrière pointue qui, en tant qu'arête de pulvérisation (Z), s'étend parallèlement à l'axe longitudinal commun (Lg) de l'organe créant un écoulement hélicoïdal (1) et du canal mélangeur (4).

5. Dispositif selon une ou plusieurs des revendications 1 à 4, **caractérisé par le fait que** les canaux hélicoïdaux (3) sont formés entre des profils (9) de l'enveloppe annulaire (2) qui sont régulièrement répartis sur la périphérie et qui, par des arêtes d'extrémité pointues (K) situées à l'intérieur définissent les ouvertures de sortie respectives des canaux hélicoïdaux (3) dans le canal mélangeur (4), les arêtes d'extrémité pointues (K) étant chacune régulièrement disposées à une certaine distance radiale et parallèlement à l'axe longitudinal (Lg) de l'organe créant un écoulement hélicoïdal (1).

6. Dispositif selon la revendication 5, **caractérisé par le fait que** les profils (9), et donc les canaux hélicoïdaux (3), sont, de la périphérie extérieure de l'enveloppe annulaire (2) vers le canal mélangeur (4), en allant chacun en rétrécissant régulièrement.

7. Dispositif selon une ou plusieurs des revendications 1 à 6, **caractérisé par le fait que** le canal hélicoïdal en question (3), dans lequel est disposé un élément profilé (6, 6'), en ce qui concerne sa longueur, définie par deux arêtes d'extrémité (K) qui sont voisines sur la périphérie en allant au maximum vers l'intérieur, vient au-delà de l'arête de pulvérisation (Z) de l'élément profilé (6, 6').

8. Dispositif selon une ou plusieurs des revendications 1 à 7, **caractérisé par le fait que** l'organe créant un écoulement hélicoïdal (1) présente une buse de carburant supplémentaire (10) qui s'étend au centre et selon l'axe à l'intérieur du canal mélangeur (4) et se termine, du côté sortie, sur un plan ou une ouverture de sortie (11) relié à la chambre de combustion (5).

9. Dispositif selon une ou plusieurs des revendications 1 à 7, **caractérisé par le fait que** l'organe créant un écoulement hélicoïdal (1) présente plusieurs éléments profilés (6, 6') régulièrement répartis sur la périphérie.

10. Dispositif selon la revendication 9, **caractérisé par le fait que** l'organe créant un écoulement hélicoïdal présente plusieurs éléments profilés supplémentaires en forme de pale (6") qui sont répartis sur la périphérie et par lesquels, chacun à l'intérieur d'un canal hélicoïdal (3), le combustible gazeux est amené à la composante d'air primaire correspondante.

11. Dispositif selon une ou plusieurs des revendications 1 à 10, **caractérisé par le fait que** le canal mélangeur (4) de l'organe créant un écoulement hélicoïdal (1) s'élargit (α > 0) ou se rétrécit (α < 0) symétriquement en direction de la chambre de combustion (5).
